# EUROPEAN PATENT SPECIFICATION

(11) **EP 1 815 697 B1**
(45) Date of publication and mention of the grant of the patent: **27.08.2008**
(21) Application number: 05808621.6
(22) Date of filing: 25.11.2005
(51) Int. Cl.: H04Q 7/22

(54) **TELECOMMUNICATIONS SERVICES APPARATUS AND METHODS**
TELEKOMMUNIKATIONSDIENSTEVORRICHTUNGEN UND -VERFAHREN
APPAREIL ET PROCEDES POUR SERVICES DE TELECOMMUNICATIONS

(30) Priority: 25.11.2004 GB 0425905
(43) Date of publication of application: 08.08.2007
(73) Proprietor: INTELLPROP LIMITED, Guernsey, Channel Islands (GB)
(72) Inventor: WILSON, Jeffrey, Fareham, Hampshire PO16 7UH (GB)
(74) Representative: Lewis, Darren John
(86) International application number: PCT/GB2005/004534
(87) International publication number: WO 2006/056791

(56) References cited:
- EP-A- 1 438 822
- WO-A-02/28129
- WO-A-20/04019634

## Description

This invention relates to telecommunications services apparatus and methods for use with a mobile telecommunications system, such as a mobile telephone system. The invention is applicable in particular to the forwarding of text messages in the GSM mobile telephony system, although in principle the technique could be applied to other types of mobile network.

Text messaging is one of the two main means of mobile communication used by subscribers of mobile telephone networks, the other being voice. Simple text messages can be of up to 160 characters in length and are known as 'short messages', though recent enhancements to the standards now allow longer messages by concatenation. Interconnection between many networks has permitted short message transmission between subscribers of different networks, and in some cases also between networks of differing technologies, such as GSM and CDMA, and this interconnectivity has led to the widespread adoption of 'texting' as a popular means of communication. GSM is well defined and specified by international standards, which define the functional blocks and the signalling messages that pass between them.

Text messaging requires alphanumeric entry using the standardised Man Machine Interface (MMI) of the mobile handset, and also requires that the message be addressed to the desired recipient. The destination address for the message may typically be specified either by entering a Mobile Station ISDN number (MSISDN) that is the mobile telephone number of the desired recipient, by selecting an entry from the handset's address book that already has the desired MSISDN pre-programmed in, or by replying to a message or missed call that has the desired address already attached. The handset's address book normally provides the MSISDN by using alphanumeric look-up of a name.

GSM networks are specified in the relevant 3GPP standards, and these recommend that the GSM short messaging services (SMS) are implemented by a store and forward device known as a Short Message Service Centre (SMSC.) This technique is analogous to recorded voicemail, and was most beneficial in the early days of GSM, when handsets were less portable that they are today, battery life was poor and radio coverage was limited. At that time only a small proportion of text messages were deliverable at the first attempt, and so a store and forward device was appropriate. Today the converse is true, and some networks report that 90% or more of messages are deliverable on the first attempt.

In the case of GSM networks, messaging services are supported by the Short Message Service (SMS). SMS defines signalling messages within the Mobile Application Protocol (MAP) for transferring a Short Message in Mobile Originated (MO) mode between the Mobile Handset and the Short Message Service Centre, and in Mobile Terminated (MT) mode between the Short Message Service Centre and the destination Mobile Handset. Comparable messaging technologies exist for other mobile network architectures, and next generation messaging systems for GSM (Enhanced Messaging Services EMS, and Multimedia Messaging Services MMS) have being introduced, and video and data messaging will follow. Collectively these are referred to as text messaging services, whether running a second generation (2G) network, an enhanced second generation network (2.5G) or a third generation network (3G). The terms 'short message' and 'text message' can be used interchangeably when referring to SMS.

Other uses of text messaging services include person to Host, and Host to person, where a Host is a network equipment or third party equipment designed to source and/or sink text messages. Hosts typically provide message collection facilities for voting events, competitions or information services and/or message source facilities for subscription services or advertising. It is common for text messages to be delivered to terminating hosts over IP networks using SMSC based protocols, although some companies such as Telsis offer email delivery to hosts over the public Internet. Text message interaction with Host applications, for example for voting, purchases, or entertainment is increasingly common, and interaction with Host applications is beginning to grow in the same way as it has previously on fixed networks in response to the development of premium rate voice services.

A technique known as Virtual Mobile works by providing a Home Location register (HLR) function for a virtual telephone number, i.e. one that is not necessarily associated with a real physical telephone terminal. The standard routing operations of GSM deliver a call or message to the correct network node by querying the HLR in order to determine the location of a telephone. By arranging for the HLR to respond to queries relating to Virtual Mobile numbers by returning the address of a network node designated for handling Virtual Mobile calls or messages, access to this network node becomes possible from any network. Virtual Mobile allows text messages addressed to host equipment in a network A to be sent from any network. Virtual Mobile systems to date have been focussed on text connectivity although the technique of voice call re-direction is known. Voice call re-direction allows a normal voice telephone call to be made to a Virtual Mobile number.

It is known that short message transmission between fixed and mobile networks is possible. The fixed network operator that wishes to enable this functionality must currently install specialised network equipment, and supply suitable terminals, that allow text messages to be transmitted over normal telephone lines to fixed terminals using modem techniques. Alternatively, text messaging to a fixed telephone may be achieved using a text to voice sub-system that allows the message to be delivered as a normal voice call.

SMS Hosts are used for a wide variety of applications including voting, competitions and Interactive TV. By their association with mass media and their appeal to the general public, some SMS applications can generate very high volumes of SMS traffic between users and SMS Hosts. In many cases this has led to overloading of existing SMSC-based infrastructure and a reduction in quality of service for all users. In many cases overload has resulted in large numbers of messages being discarded by some networks even though the senders may have already been charged.

As with person-to-person traffic, there is presently no means for prioritising certain host-originated traffic over other traffic. Indeed, in most networks there is no way to prioritise person-to-person traffic over host-originated traffic, and since both types of traffic normally pass through the same SMSCs it is common for peaks in host traffic to interfere with person-to-person traffic.

A major limitation of traditional SMS architectures involving only store and forward delivery of SMS, as originally envisaged in the specifications, is that the message store element is in the sender's network not the receiver's network. There are thousands of SMSCs in the many networks worldwide, and while a handset is unavailable there may be a message waiting in any one of them. Therefore, at least from a recipient's point of view, this architecture is inappropriate for doing anything intelligent with a waiting message other than continuing to wait. Furthermore, when a recipient is roaming, a message sent to him from any network other than his home network does not even pass through his home network.

With the increasing use of virtual numbers to address personal devices such as data cards and PDAs, the lack of standardised facilities for providing diversion is becoming increasingly apparent. Text for business use is particularly disadvantaged, because a recipient has no way to ensure that messages addressed to his multiple devices can be conveniently received by a single device. For example, many business users have both a mobile telephone and a laptop with mobile data capability. While it is very convenient to be able to use the laptop keyboard for composing text messages, if a message is sent from the laptop, its calling line identity will be a different number from that of the user's mobile telephone, and hence may not be recognised by the recipient. Furthermore a voice call to the laptop number made in reply will fail because voice calls are not supported on the data card. Another example of a situation where current text message facilities are inadequate is illustrated by the case of a person who has two handsets, one for business and one for personal use. Though he is easily able to forward calls from his personal number to his business phone during the working day, there is no way to forward text messages.

One further example can be found in document WO2004/019634 A (INTELL/PROP LIMITED; WILSON, JEFFREY) 4 March 2004 (2004-03-04).

An aim of the present invention is to solve some of these problems, particularly in relation to improving the flexibility of services for delivery of text messages. Such forwarding services may be applied for the benefit of premium subscribers only or may be applied to an operator's entire user base. In particular, embodiments of the present invention provide a fully realisable and economic solution to the many technical obstacles that have prevented the implementation of text message forwarding in the past.

According to one aspect of the invention there is provided a telecommunications services apparatus for use with a mobile telecommunications network, the apparatus comprising a message router, and a home location register programmed to forward a selected subset of routing information request messages to the message router instead of the home location register generating responses to the selected subset of routing information request messages, wherein the message router is operable to generate a modified response upon receipt of a routing information request message of the selected subset, to receive a mobile terminated text message associated with the routing information request message, to derive the destination MSISDN requested by the message sender that is associated with the mobile terminated text message, and to query the home location register to determine delivery information relating to the intended destination of the text message.

According to another aspect of the invention there is provided a telecommunications services method for a mobile telecommunications network, the method comprising programming a home location register to forward a selected subset of routing information request messages to a message router instead of the home location register generating responses to the selected subset of routing information request messages, the message router generating a modified response upon receipt of a routing information request message of the selected subset, receiving a mobile terminated text message associated with the routing information request message, deriving the destination MSISDN requested by the message sender associated with the mobile terminated text message, and querying the home location register to determine delivery information relating to the intended destination of the text message.

Further aspects of the invention provide a computer program having computer executable instructions, which when loaded on to a computer, is operable to cause the computer to perform the above method, and also to a computer program product having recorded thereon such computer program.

According to another aspect of the invention there is provided a telecommunications services apparatus for use with a mobile telecommunications network wherein the apparatus is operable to receive a routing information request message that is addressed to an HLR and to receive an associated mobile terminated short message and to derive the destination MSISDN requested by the sender that is associated with said mobile terminated message, thereby allowing the apparatus to query the HLR to determine delivery information relating to the intended destination.

According to a further aspect of the invention, the routing information request message (Send Routing Information for Short Message) is preferably forwarded by the HLR to the apparatus for those customers for whom a text divert service is applicable.

According to a further aspect of the invention, a Report Short Message Delivery Status message is also forwarded by the HLR to the apparatus for those customers for whom a text divert service is applicable.

In an alternative embodiment said messages may be intercepted by the apparatus before reaching an HLR. This may be achieved using known techniques for separating signalling messages of different types in a Signalling Transfer Point (STP) or Signalling Gateway on the basis of Transaction Capabilities subsystem number, Mobile Application Part (MAP) message type, Address type or other characteristic. It is rarely possible to isolate the desired messages completely by these methods, but remaining filtering can be done by the apparatus which is preferably an SMS Router.

In an alternative embodiment said messages may be directed to the apparatus utilising number portability functionality wherein the destination MSISDN requested by the sender is marked as being ported out of the network and wherein the HLR address indicated as the ported HLR is the address of the apparatus.

According to a further aspect of the invention the apparatus is operable to reply to a Send Routing Information for Short Message request using an IMSI value without obtaining said IMSI value from the HLR or from the Send Routing Information message.

According to a further aspect of the invention said IMSI value is dynamically created by the apparatus.

According to a further aspect of the invention said IMSI value is created from the destination MSISDN number received in the Send Routing Information message by application of a mapping function.

According to a further aspect of the invention said IMSI value may created using a dynamically assigned key value.

According to a further aspect of the invention the apparatus is operable to determine, taking account of said destination MSISDN requested by the sender, whether the recipient corresponding to this MSISDN has as active divert configured for text, and if so, to determine from characteristics of the text message, and optionally also from characteristics of the recipient's subscription profile and /or the diverted-to address, whether the said mobile terminated message is divertible, and if so to correspondingly modify the destination address of the text message prior to querying the HLR to determine delivery information relating to the diverted destination and making a delivery attempt. It should be noted that due to technical and/or commercial consideration, some types of message may need to be prevented from being diverted. Examples could include Over The Air (OTA) handset configuration messages, or Premium Rate reverse-billed content.

According to a further aspect of the invention the apparatus is operable to store message-waiting information in association with a destination MSISDN requested by the sender, indicative that one or more messages addressed to said MSISDN were not successfully delivered, said message-waiting information including a network address representative of the network node that sent the message.

According to a further aspect of the invention, where applicable the apparatus is operable to store in association with a destination MSISDN requested by the sender, the address currently configured as a divert destination address. Where no divert has been set, or the divert is disabled, the divert address may be blanked, set to the same value as the said destination MSISDN, or otherwise marked as inactive. Alternatively the apparatus may be operable to query another platform to retrieve divert information as and when required.

According to a further aspect of the invention, the apparatus is operable to search stored divert information and/or message-waiting information, using a destination MSISDN requested by the sender as the search key.

According to a further aspect of the invention, the apparatus is operable to search stored divert information using a divert destination address as the search key, whether the information is stored on the apparatus, or externally.

According to a further aspect of the invention, the apparatus is operable to store and search said information using a hashing technique.

Embodiments of the invention allow for a priority service or enhanced class of service for text messaging to be applied to certain customers over others. An operator can therefore provide a higher quality of service to its most valuable customers, particularly in respect of delivery delay and frequency of delivery attempts.

It is also possible for a user to be able to forward text messages to a text-to-speech service whilst driving a vehicle. Text messages can then be delivered as a voice call, which can be received and presented using a hands-free apparatus.

The invention will now be described, by way of example, with reference to the accompanying drawings, in which like references denote like features, and in which:
Figure 1 is a diagram showing known signalling flow in a message delivery system; and
Figures 2 to 12 are diagrams showing signalling flows in telecommunications services apparatus according to respective embodiments of the invention.

Legacy SMSC architectures can only process mobile originated messages sent by the network's own subscribers. Mobile terminated messages sent to subscribers from other networks do not pass through the home network SMSC, so the SMSC cannot add value to these messages and therefore services such as SMS Divert cannot be provided using legacy SMSC architectures.

An HLR has the capability to unconditionally divert a voice call, however in traditional HLRs this divert information is ignored for text messages.

An HLR modification is therefore required in order to provide controlled diversion of text messages. However, unlike the situation in voice telephony where all calls can be safely diverted, with text messages it is necessary to apply intelligent routing on a message by message basis.

A key reason for this is that there are different classes of text messages. In particular Over the Air (OTA) messages for handset configuration should never be diverted to a different handset. The HLR cannot check the class of message as it never sees the message itself. It is not therefore possible to implement an HLR-only SMS Diversion scheme.

Using a traditional SMSC-based network architecture, mobile terminated messages do not pass through the destination subscriber's home SMSC. If the destination subscriber is roaming the message will not even pass through any part of their home network.

This means that in an SMSC-based SMS network there is no device in the home network that can add value to mobile terminated messages and therefore mobile terminated applications such as SMS Divert cannot be offered. Intercepting mobile terminated messages is a key issue in adding value to messages before they are delivered. To ensure that all MT messages addressed to subscribers can be seen by the apparatus, the apparatus first needs to have access to all of the corresponding SRI_SM messages.

To provide intelligent diversion of short messages, the message type must be determined - this can only be done if the divert application is implemented by an apparatus that also handles the mobile terminated message.

The present invention is primarily designed for diversion of text messages from one handset to another. However, messages could also be diverted to a laptop or PC if the diverted number was a DataCard or it was the virtual number of a desktop PC, or alternatively could be diverted to email or to another medium.

### Direction of Messages to the Apparatus

In preferred embodiments of the present invention, it is arranged that the following three types of MAP messages are delivered to the Apparatus:
■ MAP Send Routing Information for Short Message (SRI_SM, sent from SMSC to HLR) The apparatus responds to these messages on behalf of the HLR, giving its own address as the VLR address for a subsequent MT Forward Short Message (MTFwdSM) transmission from the SMSC. The response also carries an IMSI. In a preferred embodiment, this IMSI value is created by the SMS Router by mapping the B number (the MSISDN in the SRI_SM) into an IMSI format.
■ MAP Report Short Message Delivery Status (ReportSMDeliveryStatus, sent from SMSC to HLR) The apparatus acknowledges but otherwise ignores these messages. They are forwarded by the HLR instead of being processed by the HLR in order to avoid the undesirable situation where the HLR could erroneously set Message Waiting using the B number, where in fact it is the C number that is unavailable.
■ MAP Forward Short Message (MTfwdSM send from SMSC to MSC/VLR)
   Direction of the first two of these to the apparatus is preferably achieved by a minor but novel modification to standard HLR functionality so that the HLR can forward these messages to the apparatus rather than acting on them in the usual way. This modification is now described in more detail:

### HLR forwarding technique

In a preferred embodiment the HLR is modified so that subscribers who are to benefit from an SMS Divert service, or from a class of service that includes SMS Divert, can be identified in some way using part of their stored subscription information.

The HLR needs to provide the following support:
- For each subscriber, the operator must be able to provision an indicator indicating that the subscriber should be allowed to use SMS Divert. This may be a Class of Service indicator.
- For each SRI_SM message and ReportSMDeliveryStatus message received (except those from the apparatus), the HLR should check the above indicator to see whether the associated B number has the SMS Divert indicator set, or has the necessary Class of Service. If it has, then the HLR must forward the message to the apparatus, regardless of the availability or status of the subscriber.
- The HLR must not set Message Waiting for any SRI_SM or ReportSMDeliveryStatus messages forwarded to the SMS Router.

### Other techniques

Alternative methods of arranging for the two message types to arrive at the apparatus include
1. Using number portability mechanisms. By 'porting out' premium subscribers to an alternative HLR address in the same network, where said address is actually an address of the apparatus, it can be arranged that the special processing of certain messages can be carried out by the apparatus, while allowing the real subscriber data record to remain on its original HLR. Other message types are forwarded transparently to the HLR.
2. Using interception techniques, where the apparatus is placed logically in-line with the HLR, so that it can filter and process selected messages before they reach the HLR. Some pre-filtering may advantageously be carried out elsewhere in the signalling network so that the apparatus does not need to transparently carry the entire HLR signalling load.

Once the apparatus has access to the SRI_SM messages, direction of the third type of message, the MT_Fwd_SM, to the apparatus makes use of a known mobile location aliasing technique, as described in published Patent Application No. WO 03/049461 (to which reference is directed) to ensure that SMS Divert works for every message, even those that would not otherwise pass through the home network at all.

### Data Structures

The apparatus maintains a table, which can be called the Apparatus Message Waiting Data (MWD) table, which is analogous to the similar function within an HLR. In a text diverting system however both tables are required, one in the HLR and one in the apparatus. For the purposes of the following description, three addresses are relevant-
■ the SMSC address from which an MT message is sent
■ the B number, which is the destination address requested by the original sender
■ the C number, which is the actual address to which delivery is attempted. This will be different from B if a divert is set, and the same as B otherwise.

The HLR MWD table is unchanged in function, and records an entry in two situations-
1. Early failure, when an SRI_SM is received for a C number that is known to be absent
2. Late failure, when informed via a Report SM Delivery Status message that a delivery attempt to a C number was unsuccessful.

The HLR entry records the C number and a list of equipment addresses (normally SMSCs but in this invention this can also be the apparatus address) that have sent an SRI_SM for this C number.

**Table 1: HLR MWD Table example entry**

| C number | SMSC address list |
|---|---|
| +44 7700 900909 | +39 123456, Apparatus address, +39 234567 |

The Apparatus MWD table records or updates an entry in two situations-
■ Early failure, where the HLR responds to an SRI_SM for the C number from the apparatus, indicating that the C number is absent. In this case a new record is created in the apparatus for the requested B number, recording the C number and the originating SMSC, or if record for the requested B number already exists but the originating SMSC is not yet present in its list, then the SMSC address is added to the existing record.
■ Late failure, where the HLR responds to an SRI_SM for the C number from the apparatus, indicating that the C number is available, but then a subsequent MTfwdSM delivery attempt by the apparatus to this C number fails. In this case a record is created or updated in the apparatus for the requested B number, recording the C number and the originating SMSC. If a record for the requested B number already exists but the originating SMSC is not yet present in its list, then the SMSC address is added to the existing record.

**Table 2. Apparatus MWD Table example**

| B number | C number | SMSC address list |
|---|---|---|
| +44 701 290090 | +44 7700 900909 | +39 345678, +39 98765 |

Each entry in the Apparatus MWD table represents one or more messages that are waiting to be delivered.

A key aspect of correct operation of this novel solution is that two message waiting tables are used: the normal one in the HLR which operates unchanged using the actual delivery number tried (C), and an additional one in the apparatus, which operates using both B and C.

Additional details of a preferred embodiment of this aspect of the solution areas follows-
■ If B changes any divert settings (i.e. on, off or to a different number) then if there is a record in the apparatus MWD data table that has B in column 1, the apparatus should inform the SMSC(s) using an alertSC message to retry the outstanding messages to B. B (There should never be more than one record with the same B number in column 1.)
■ If the HLR informs the apparatus that C is now available again (with an AlertSC message) then if there are any records in the apparatus MWD data table that have C in column 2, then the apparatus should inform the SMSC(s) using an alertSC message to retry the outstanding messages to corresponding B number in the same record.
■ If a short message delivery attempt by the apparatus fails, or if the HLR informs the SMS Router of an early failure due to absence of C, then an entry is made or updated in the apparatus MWD table, listing B in column 1, C in column 2 (where C may the same as B if no divert was active) and the SMSC address(es) that have attempted to send to B. Other data structures are possible.
■ If a short message from SMSC X addressed to B is successfully delivered by the apparatus, then the apparatus should check its MWD table for an entry for B in column 1, send an AlertSC to any SMSCs other than X that are listed in this entry, and then delete this entry.

Unlike the HLR MWD mechanism, the apparatus MWD mechanism never returns 'absent subscriber' to an SMSC as a result of having an entry in the apparatus MWD table. Only the HLR can generate such 'early failures'. Absent subscriber, or other failures are only returned to the SMSC as a result of an actual delivery failure, or a corresponding indication from the HLR.

### System Operation

The normal signalling flow for MT messages, and the signalling flow for MT messages with SMS Divert active, are now described. Signalling functions of the Apparatus are implemented using an SMS Router, such as a Telsis (RTM) SMS Router, manufactured by Telsis Limited. In this description, B is the destination number originally requested by the sender, and C is the number to which a delivery attempt is to be made. B may therefore be 'diverted' to C. If no divert is active, then C is the same as B and the two designators may be used interchangeably.

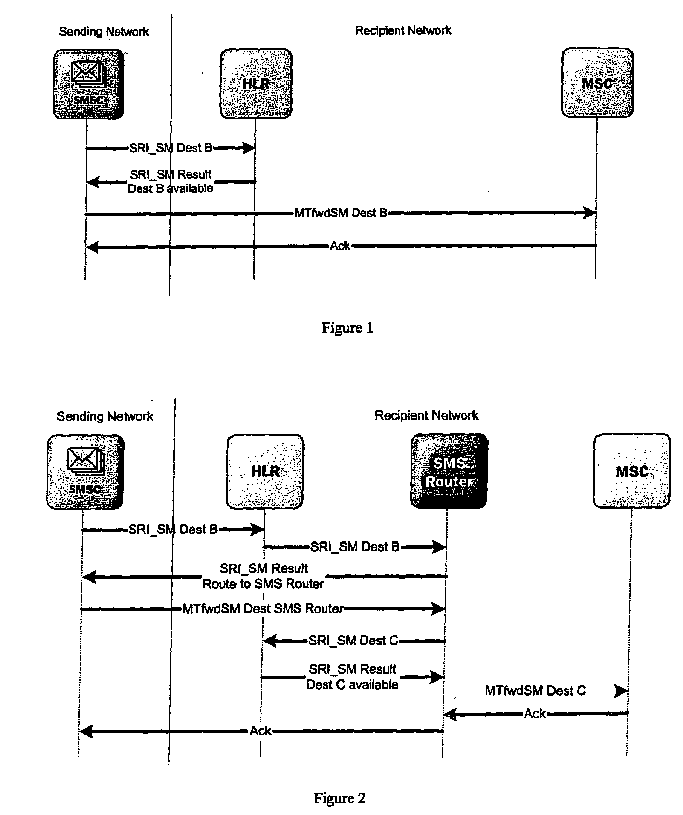

Figure 1 shows the normal (non-divert) signalling flow for successful delivery of an MT message to destination B. The SMSC sends an SRI_SM message to the HLR, which responds with the routing information for that message. The SMSC then sends the message to the destination MSC, and receives an acknowledgement.

With SMS Divert, a highly efficient HLR forwarding technique is used to enable the SMS Router(s) to intercept the mobile terminating messages. The divert settings are then applied before the messages are forwarded.

Figure 2 shows the message flow for SMS Divert. When the HLR receives the initial SRI_SM message and has completed credit checks and/or number portability checks according to network configuration in order to ascertain whether delivery is permitted, the HLR looks up whether or not SMS Divert (or an equivalent Class of Service) is provisioned for the B number. If SMS Divert is not provisioned then the HLR handles the message with the normal (non-divert) signalling flow.

If SMS Divert is provisioned for the destination subscriber then the HLR forwards the SRI_SM to the SMS Router. The SMS Router checks whether a divert is active, either by looking in storage associated with the apparatus or by querying an external storage device. The SMS Router then replies to the SRI_SM, giving its own address as the VLR address, which instructs the SMSC to route the short message to the SMS Router. The reply is also required to contain an IMSI, but at this point the SMS Router is unable to determine the final destination address for the message, since the permissibility of a divert can only be determined once the message itself has been examined. To overcome this difficulty, the SMS Router generates an alias IMSI, preferably by mapping the B number (MSISDN) into an IMSI format, and uses this in the reply. Alternative IMSI constructions are possible.

When the SMS Router receives the MTfwdSM message, if divert is active (i.e. a divert number has been set and is currently enabled) and the characteristics of the short message permit a divert to be used, then the SMS Router performs the mapping from destination B to the diverted destination C, and sends an SRI_SM for C to the HLR. If divert is not active or not permissible for this message, then the SMS Router does not perform the mapping from destination B to the diverted destination C, and instead sends an SRI_SM for B to the HLR.

If the reply from the HLR indicates that the selected destination is available then the SMS Router forwards the message to the corresponding destination.

If the priority flag was set on the original SRI_SM received by the SMS Router, then this is preferably replicated in the subsequent SRI_SM request sent to the HLR. The effect of the priority flag should be to force a delivery attempt even if the HLR indicates that the destination number is currently unavailable, and on receipt of the HLR's reply, the SMS Router preferably complies with this requirement.

The SMS Router handles both the SRI_SM and the MTForwardSM messages so that it can send the correct responses to the SMSC if the delivery fails. The system also handles the Message Waiting Data (MWD) for diverted messages. The signalling message flows for MT failure modes and message-waiting are described below.

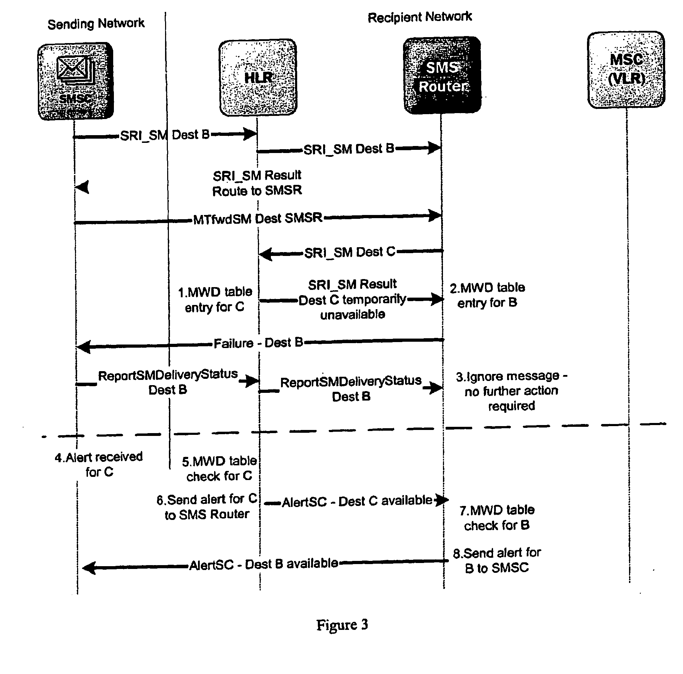

With reference to Figure 3, the message waiting mechanism is now described, showing how it is used for a simple failure mode. The original message destination, B, has a divert active to destination C. However, C is temporarily unavailable (e.g. switched off).
1. If destination C is not available then the HLR sets a message waiting data (MWD) entry for destination C, with the message origin as the SMS Router.
2. When the SMS Router receives the SRI_SM Result indicating that C is absent, it sets a MWD entry for B with the message origin as the originating SMSC, and reports the failure to the SMSC in respect of B.
3. The SMS Router performs no further action on receiving the ReportSMDeliveryStatus apart from acknowledging it. It is important that the HLR forwards this message to the SMS Router, rather than actioning it as normal, because otherwise the HLR would set MWD on B, which would be incorrect. Alternatively the HLR could be configured to ignore the ReportSMDeliveryStatus message, but that would be a less flexible solution.
4. Some time later, the HLR receives an update - C is now available.
5. The HLR checks its MWD table, and sends an AlertSC (alert Service Centre) message to the SMS Router indicating that C is available.
6. The SMS Router looks up C in column 2 of its MWD table, and finds (in this example) one entry. It maps C back to B, and looks up the appropriate SMSC address(es).
7. The SMS Router then sends an alert for B to the SMSC(s).

### Other failure modes: Divert deactivated

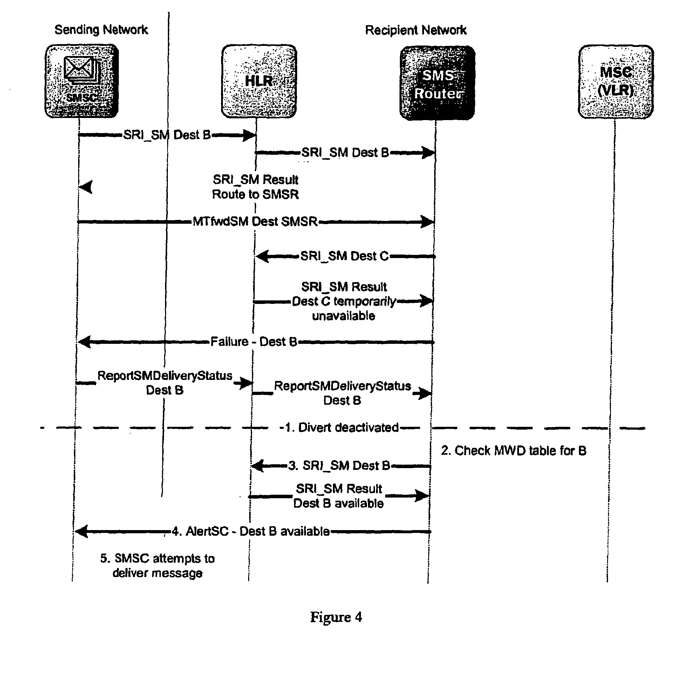

This is illustrated in Figure 4. In this failure mode, the divert is active, but the diverted destination is temporarily unavailable (e.g. switched off). The SMS Router informs the originating SMSC that the destination is unavailable, and the SMSC stores the message.

The subscriber then deactivates their divert. The message should now be delivered to the original, not the diverted destination. The SMS Router therefore checks the availability of the original destination. If the original destination is available then the SMS Router alerts the originating SMSC, which then attempts to redeliver the message.
1. The divert is deactivated, so any outstanding messages should now be delivered to destination B
2. The SMS Router checks the MWD table for outstanding messages for B
3. If any exist then the SMS Router asks the HLR if B is available
4. If so then the SMS Router sends an alert for B to the appropriate SMSC
5. The SMSC then tries to resend the message

### Divert deactivated, then activated

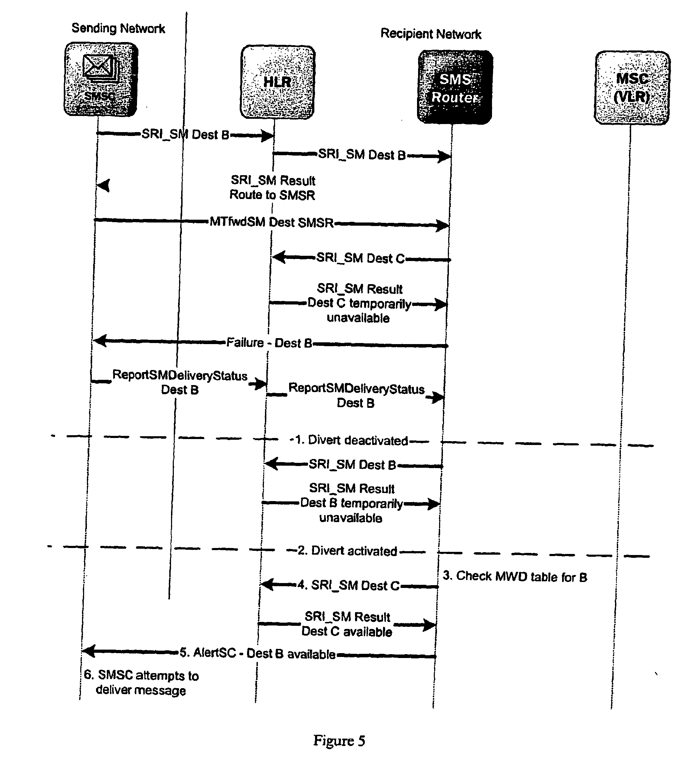

This is illustrated in Figure 5. In this failure mode, the divert is active, but the diverted destination is temporarily unavailable (e.g. switched off). The SMS Router informs the originating SMSC that the destination is unavailable, and the SMSC stores the message.

The message flow in the previous section is then followed, but the original destination is not available. The subscriber then activates their divert again. The message should now be delivered to the diverted destination. The SMS Router therefore checks the availability of the diverted destination. If the diverted destination is available then the SMS Router alerts the originating SMSC, which then attempts to redeliver the message.
1. The divert is deactivated, but B is not available, so the SMS Router simply waits for any further action
2. The divert is activated again
3. The SMS Router checks the MWD table for outstanding messages for B
4. If any exist then the SMS Router asks the HLR if C is available
5. If so then the SMS Router sends an alert for B to the appropriate SMSC
6. The SMSC then tries to resend the message

If the divert destination changes from C to D while the divert is active then the "Divert activated" actions are also performed, for the new divert destination, D.

If the divert destination is not available when the divert is activated then the SMS Router simply waits for any further action.

### Early Failure, divert Active and C permanently unavailable

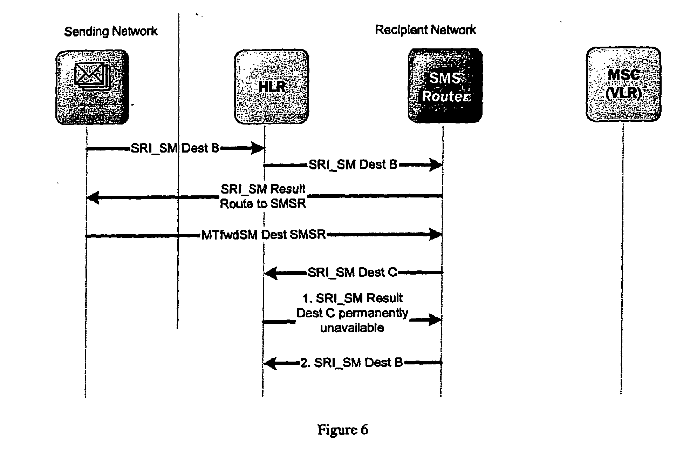

This is illustrated in Figure 6. In this failure mode, the divert is active, but the diverted destination is permanently unavailable (e.g. invalid number). The message can therefore never be delivered to the diverted destination. The messages are therefore delivered as though the divert was inactive - to the original destination, the SMS Divert subscriber. The subscriber, receiving messages unexpectedly, is alerted that divert is not working as expected. They can then check their divert settings and contact customer care to discover what the problem is.
1. C is permanently unavailable (e.g. the number is invalid)
2. The SMS Router attempts to deliver the message to the original destination, B

If B is not available, then the following scenario applies.

### Early Failure, divert inactive and B temporarily unavailable, alert received for B

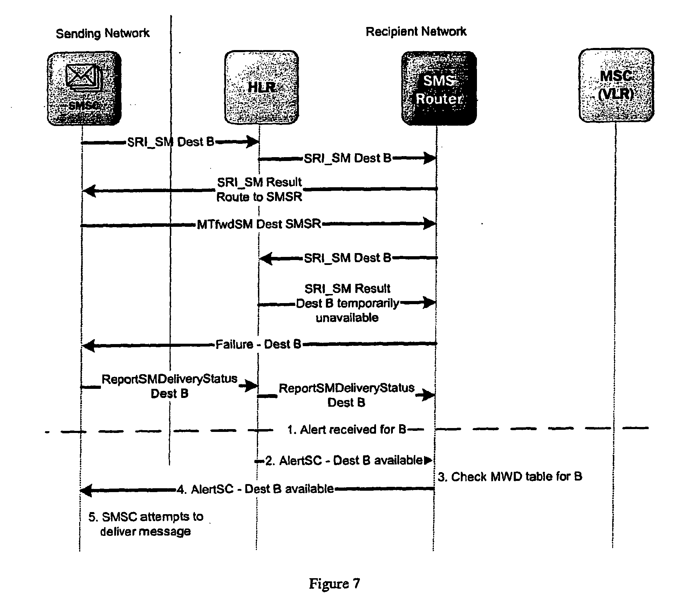

This is illustrated in Figure 7. In this failure mode, the divert is inactive, but the original destination is temporarily unavailable (e.g. switched off). The SMS Router informs the originating SMSC that the destination is unavailable, and the SMSC stores the message.

If the original destination becomes available then the SMS Router alerts the SMSC and the SMSC attempts to redeliver the message.

If B is unavailable then the HLR and the SMS Router both set MWD for B. (C is the same as B)
1. The divert is inactive and the HLR receives an alert for B
2. The HLR sends an AlertSC for B to the SMS Router
3. The SMS Router checks the MWD table for outstanding messages for B
4. If any exist then the SMS Router forwards the alert to the appropriate SMSC
5. The SMSC then tries to resend the message

### Early Failure, divert inactive and B temporarily unavailable, divert activated

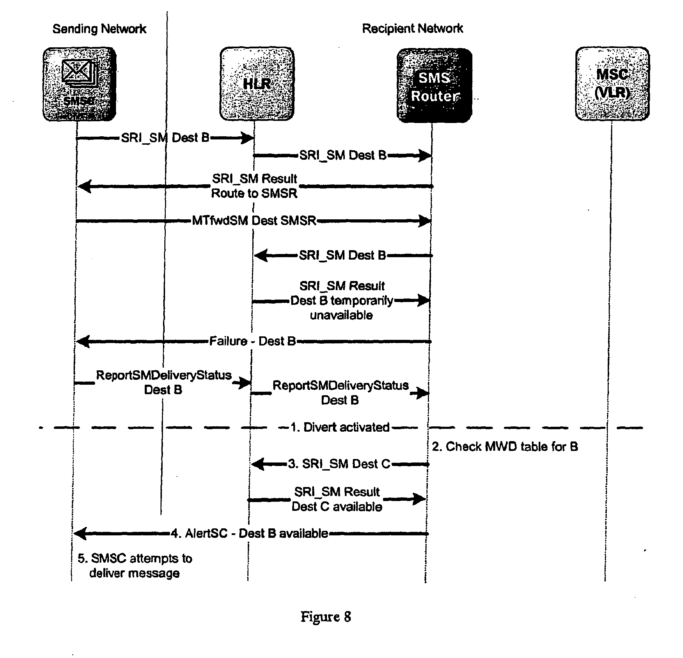

This is illustrated in Figure 8. In this failure mode, the divert is inactive, but the original destination is temporarily unavailable (e.g. switched off). The SMS Router informs the originating SMSC that the destination is unavailable, and the SMSC stores the message.

The subscriber then activates their divert. The message should now be delivered to the diverted destination. The SMS Router therefore checks the availability of the diverted destination. If the diverted destination is available then the SMS Router alerts the SMSC, which then attempts to redeliver the message.
1. The divert is activated
2. The SMS Router checks the MWD table for outstanding messages for B
3. If any exist then the SMS Router asks the HLR if C is available
4. If so then the SMS Router sends an alert for B to the appropriate SMSC
5. The SMSC then tries to resend the message

If the HLR reports C as unavailable then the previous message flows for temporarily unavailable or permanently unavailable are followed.

### Late Failure, divert Active

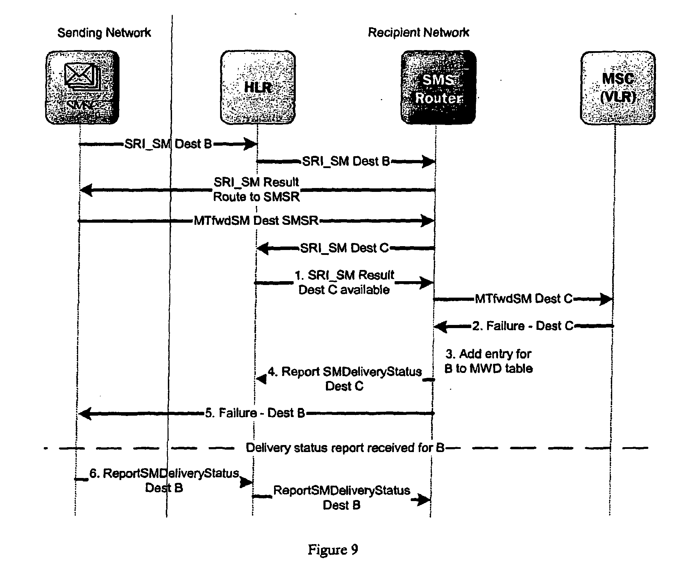

This is illustrated in Figure 9. In this failure mode, the divert is active and the divert destination appears to be available. However, the message delivery fails (e.g. destination SIM is full). The SMS Router informs the HLR and SMSC of the failure. The SMS Router waits for the SMSC to confirm the failure, and is then ready to receive any alerts or changes in divert status.
1. The HLR reports C to be available
2. However, the delivery to C fails
3. The SMS Router adds an entry for B to the MWD table
4. The SMS Router informs the HLR of the delivery failure and the failure reason
5. The SMS Router informs the SMSC of the delivery failure and the failure reason
6. The SMSC sends the ReportSMDeliveryStatus for B to the SMS Router
7. The SMS Router acknowledges but otherwise ignores the ReportSMDeliveryStatus

The SMS Router sends the ReportSMDeliveryStatus for C (3) to the HLR as soon as the MSC informs the SMS Router of the delivery failure. This ensures that the HLR is aware of the failure and has the correct failure reason - it can then correctly add an entry for C to the MWD table.

After the ReportSMDeliveryStatus is received from the SMSC then any actions, such as an alert for C or the divert being deactivated, are handled as shown previously.

### Late Failure, Divert Inactive

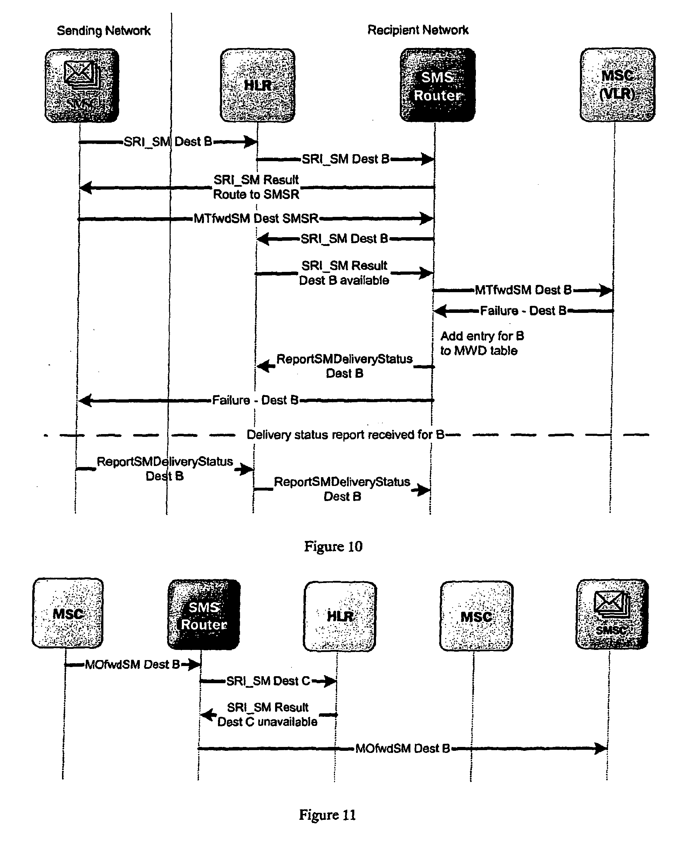

This is illustrated in Figure 10. In this failure mode, the divert is inactive and the original destination appears to be available. However, the message delivery fails (e.g. destination SIM is full). The SMS Router informs the HLR and SMSC of the failure.

If the divert is inactive and the delivery of B fails late, then the SMS Router performs the same actions for B as for C in the previous failure mode.

If SMS Routers are also available in the MO path, i.e. between the originating MSC and the MO Store or SMSC, then some diversion functionality for originated traffic form the network's own subscribers can be effectively implemented there. This will reduce the overall signalling load on the network compared to doing all diversion functionality in the MT path, Note that for off-net originated traffic, there is no option but to implement diversion in the MT path. (Off-net here means originated by other networks' subscribers.)

### MO Diversion: Early Failure, divert Active

This is illustrated in Figure 11. In this failure mode the divert is active, but the diverted destination is unavailable (e.g. switched off). The SMS Router forwards the message to the SMSC with the original destination. When the SMSC attempts redelivery, the MT signalling paths are followed.

### MO Diversion: Late Failure, divert Active

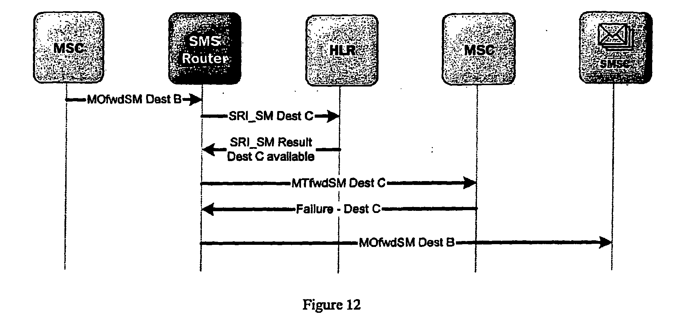

This is illustrated in Figure 12. In this failure mode the divert is active and the HLR reports the diverted destination as available. However, the delivery fails (e.g. SIM full). The SMS Router, as for early failure, forwards the message to the SMSC with the original destination. When the SMSC attempts redelivery, the MT signalling paths are followed.

### Prevention of Diversion Loops

In a preferred embodiment, messages are only diverted once; the system prevents chaining of diverts between multiple handsets. This is achieved by only looking up divert settings for the B number. If the B number has a divert set to a different C number, then the system preferably does not check whether the C number also has a divert set. Checking C as well would open the possibility of loops if C were diverted back to B for example. It is possible to handle this in other ways, for example by allowing chained diverts but limiting the maximum number of such diverts on any one message transmission.

It is also possible to set a currently unused bit in the TPDU and use this as a divert indicator, so that after it is set, other equipment can selectively prevent further diversions in order to avoid loops or long chains.

Other means of indicating a diverted message are possible.

### Configuration and management

Divert settings can be configured by a number of methods, for example by sending simple text messages such as 'DIVERT SMS TO <number>' to a short code. A suitable short code could be for example the same short code that is used for customer care voice calls. SMS configuration enables customers to change their settings simply and easily, at any time of day.

Alternatively, the apparatus can optionally use the existing settings for voice divert, and apply the unconditional voice forwarding conditions to text message diversion. This has the advantage of being very simple to understand, and for many users this would make text divert behave in an obvious and intuitive way. Technically this can be implemented by the apparatus querying the HLR to determine the Unconditional voice forwarding setting, which can be done for example using the Interrogate_SS (Interrogate Supplementary Service) MAP message or the ATSI (Any Time Service Interrogate) MAP message, or even by USSD.

More flexible embodiments of the invention would allow fully independent setting of the diverts for text. The registration and activation information for the service (i.e. the divert number and whether it is active or not) may be stored in the apparatus preferably on an SMS SC**P**, **or may** be held on an external platform and accessed over a protocol interface, preferably using a protocol such as LDAP.

The diverted destination must preferably be a national number. The SMS Divert application preferably checks the configured divert destination for validity e.g. correct country code.

Alternatively, if the network already has advanced voice routing systems that allow integration with third party equipment then the Intelligent SMS Routing system can use this data, for example using the voice diversion settings for text diversion.

### Default syntax for SMS configuration

The following text message syntax may be used to configure the subscriber SMS Divert settings. These commands are sent in a text message to the configuration shortcode. Other syntaxes are possible.
Turn divert off:
   DIVERT OFF
Turn divert on:
   DIVERT ON
Set up / change divert destination:
   DIVERT TEXT TO <diverted destination>
Check status:
   DIVERT STATUS

An SMS Wizard can provide intelligent processing of the SMS configuration messages, enabling subscribers to configure the service using natural language.

### Further application of the invention.

The invention has been described as applicable to a traditional SMS architecture, where mobile-originated (MO) short messages are normally stored in an SMSC prior to delivery. However, this SMSC-based MO Store architecture has a number of well-known disadvantages. A key disadvantage is that stored messages for a given recipient may be distributed around multiple SMSCs in various networks, and so the recipient cannot exercise any control over message delivery, timing or routing. A beneficial solution to this problem is to implement **MT message** stores, which are in the recipient's network. This allows all messages for a recipient to be collected on one place, regardless of source, and intelligently handled according to the recipient's wishes. In particular it is no longer necessary for the message waiting mechanism to be able store the addresses of multiple SMSCs that have messages outstanding for a recipient. Since the MT store is always available, the delivery leg from the sending network to the recipient store is almost always successful. If the final delivery to the recipient is unsuccessful, then message-waiting data will only need to store the address of the apparatus.

The present invention is equally applicable to this improved architecture with an MT store. Configuration options for setting up Diverts can also be simpler, since if the MT store is also preferably able to deliver messages via multiple media, including email, then email access to divert settings, for example, can be easily provided. In this way, a traveller who leaves GSM coverage for several days will no longer lose all his messages if they exceed their validity period without delivery, since he can arrange them to be diverted and/or delivered by another method such as email.

In so far as the embodiment(s) of the invention described above may be implemented, at least in part, using software controlled processing apparatus, it will be appreciated that a computer program providing such software control and a storage medium by which such a computer program is stored are envisaged as aspects of the invention.

## Claims

1. A telecommunications services apparatus for use with a mobile telecommunications network, the apparatus comprising a message router, and a home location register programmed to forward a selected subset of routing information request messages to the message router instead of the home location register generating responses to the selected subset of routing information request messages, wherein the message router is operable to generate a modified response upon receipt of a routing information request message of the selected subset, to receive a mobile terminated text message associated with the routing information request message, to derive the destination MSISDN requested by the message sender that is associated with the mobile terminated text message, and to query the home location register to determine delivery information relating to the intended destination of the text message.

2. Apparatus according to claim 1, wherein the home location register is operable to forward the routing information request message to the message router for selected subscribers, such as to a text divert service.

3. Apparatus according to claim 2, wherein the home location register is also operable to forward a "report short message delivery status" message to the message router for the selected subscribers.

4. Apparatus according to claim 1, claim 2 or claim 3, wherein the destination MSISDN requested by the message sender is marked as being ported out of the network, and wherein the home location register address indicated as the ported home location register is the address of the message router.

5. Apparatus according to any one of claims 1 to 4, wherein the message router is operable to reply to a routing information request message using an IMSI value not obtained from the home location register or from the routing information request message.

6. Apparatus according to claim 5, wherein the IMSI value is dynamically created by the message router.

7. Apparatus according to any one of claims 1 to 4, wherein the message router is operable to create an IMSI value from the destination MSISDN received in the routing information request message by application of a mapping function.

8. Apparatus according to any one of claims 1 to 4, wherein the message router is operable to create an IMSI value using a dynamically assigned key value.

9. Apparatus according to any one of claims 1 to 8, wherein the message router is operable to determine, on the basis of the destination MSISDN requested by the sender, whether the message recipient corresponding to the destination MSISDN has an active divert configured for text, and if so, to determine from characteristics of the text message whether the mobile terminated text message is divertible, and if so, to correspondingly modify the destination address of the text message prior to querying the home location register to determine delivery information relating to the diverted destination and making a delivery attempt.

10. Apparatus according to claim 9, wherein the message router is operable to determine whether the mobile terminated text message is divertible additionally on the basis of characteristics of the message recipient's subscription profile and/or the diverted-to address.

11. Apparatus according to any one of claims 1 to 10, including a store for storing message-waiting information in association with a destination MSISDN requested by the sender, indicative that at least one message addressed to the MSISDN was not successfully delivered, the message waiting information including a network address representative of the network mode that sent the text message.

12. Apparatus according to any one of claims 1 to 11, wherein the message router is operable to store, in association with a destination MSISDN requested by the sender, the address currently configured as a divert destination address.

13. Apparatus according to claim 12, wherein, if no divert has been set or if the divert is disabled, the divert destination address is either blanked, set to the same value as the destination MSISDN, or marked as inactive.

14. Apparatus according to claim 12 or claim 13, wherein the message router is operable to search stored divert information and/or message-waiting information, using a destination MSISDN requested by the message sender as a search key.

15. Apparatus according to claim 12, claim 13 or claim 14, wherein the message router is operable to search stored divert information using a divert destination address as a search key.

16. Apparatus according to any one of claims 12 to 15, wherein the message router is operable to store and search the divert information using a hashing technique.

17. A telecommunications services method for a mobile telecommunications network, the method comprising programming a home location register to forward a selected subset of routing information request messages to a message router instead of the home location register generating responses to the selected subset of routing information request messages, the message router generating a modified response upon receipt of a routing information request message of the selected subset, receiving a mobile terminated text message associated with the routing information request message, deriving the destination MSISDN requested by the message sender associated with the mobile terminated text message, and querying the home location register to determine delivery information relating to the intended destination of the text message.

18. A method according to claim 17, wherein the home location register forwards the routing information request message to the message router for selected subscribers, such as to a text divert service.

19. A method according to claim 18, wherein the home location register also forwards a "report short message delivery status" message to the message router for the selected subscribers.

20. A method according to claim 17, claim 18 or claim 19, wherein the destination MSISDN requested by the message sender is marked as being ported out of the network, and wherein the home location register address indicated as the ported home location register is the address of the message router.

21. A method according to any one of claims 17 to 20, wherein the message router replies to a routing information request message using an IMSI value not obtained from the home location register or from the routing information request message.

22. A method according to claim 21, wherein the IMSI value is dynamically created by the message router.

23. A method according to any one of claims 17 to 20, wherein the message router creates an IMSI value from the destination MSISDN received in the routing information request message by application of a mapping function.

24. A method according to any one of claims 17 to 20, wherein the message router creates an IMSI value using a dynamically assigned key value.

25. A method according to any one of claims 17 to 24, wherein the message router determines, on the basis of the destination MSISDN requested by the sender, whether the message recipient corresponding to the destination MSISDN has an active divert configured for text, and if so, to determine from characteristics of the text message whether the mobile terminated text message is divertible, and if so, to correspondingly modify the destination address of the text message prior to querying the home location register to determine delivery information relating to the diverted destination and making a delivery attempt.

26. A method according to claim 25, wherein the message router determines whether the mobile terminated text message is divertible additionally on the basis of characteristics of the message recipient's subscription profile and/or the diverted-to address.

27. A method according to any one of claims 17 to 26, including storing message-waiting information in association with a destination MSISDN requested by the sender, indicative that at least one message addressed to the MSISDN was not successfully delivered, the message waiting information including a network address representative of the network mode that sent the text message.

28. A method according to any one of claims 17 to 27, wherein the message router stores, in association with a destination MSISDN requested by the sender, the address currently configured as a divert destination address.

29. A method according to claim 28, wherein, if no divert has been set or if the divert is disabled, the divert destination address is either blanked, set to the same value as the destination MSISDN, or marked as inactive.

30. A method according to claim 28 or claim 29, wherein the message router searches stored divert information and/or message-waiting information, using a destination MSISDN requested by the message sender as a search key.

31. A method according to claim 28, claim 29 or claim 30, wherein the message router searches stored divert information using a divert destination address as a search key.

32. A method according to any one of claims 28 to 31, wherein the message router stores and searches the divert information using a hashing technique.

33. A computer program having computer executable instructions, which when loaded on to a computer is operable to cause the computer to perform the method according to any one of claims 17 to 32.

34. A computer program product having a computer readable medium having recorded thereon information signals representative of the computer program according to claim 33.

## Patentansprüche

1. Telekommunikationsdienstevorrichtung für die Verbindung mit einem mobilen Telekommunikationsnetzwerk, wobei die Vorrichtung ein Nachrichtenrouter und ein Standortverzeichnis aufweist, das programmiert ist, um eine ausgewählte Untergruppe von Routinginformationsanforderungsnachrichten an den Nachrichtenrouter weiterzuleiten statt dass das Standortregister Antworten auf die ausgewählte Untergruppe von Routinginformationsanforderungsnachrichten erzeugt, wobei der Nachrichtenrouter betreibbar ist, um eine modifizierte Antwort zu erzeugen auf den Empfang einer Routinginformationsanforderungsnachricht der ausgewählten Untergruppe, um eine von einem Mobiltelefon stammende Textnachricht zu empfangen, die mit der Routinginformationsanforderungsnachricht verknüpft ist, um die Ziel-MSISDN, die von den Nachrichtensender angefordert wurde und mit der vom Mobiltelefon stammenden Textnachricht verknüpft ist, abzuleiten und das Standortverzeichnis anzufragen, um die Auslieferungsinformation betreffend dem beabsichtigten Ziel der Textnachricht zu bestimmen.

2. Vorrichtung nach Anspruch 1, bei dem das Standortverzeichnis betreibbar ist, um die Routinginformationsanforderungsnachricht zum Nachrichtenrouter für ausgewählte Teilnehmer beispielsweise zu einem Textumleitservice weiterzuleiten.

3. Vorrichtung nach Anspruch 2, bei der das Standortverzeichnis ebenso betreibbar ist, um eine "Kurznachrichtsauslieferungsstatusbericht"-Nachricht an den Nachrichtenrouter für die ausgewählten Teilnehmer weiterzuleiten.

4. Vorrichtung nach Anspruch 1, 2 oder 3, bei der die Ziel-MSISDN, die von dem Nachrichtenabsender angefordert wurde, als aus dem Netzwerk portiert markiert wird, und bei dem die Adresse des Standortverzeichnisses, die als portiertes Standortverzeichnis angezeigt wird, die Adresse des Nachrichtenrouters ist.

5. Vorrichtung nach einem der Ansprüche 1 bis 4, bei der der Nachrichtenrouter betreibbar ist, um auf eine Routinginformationsanforderungsnachricht zu antworten unter Verwendung eines IMSI Wertes, der nicht von dem Standortregister oder aus der Routingsinformationsanforderungsnachricht erhalten wurde.

6. Vorrichtung nach Anspruch 5, bei der der IMSI Wert dynamisch durch den Nachrichtenrouter erzeugt wird.

7. Vorrichtung nach einem der Ansprüche 1 bis 4, bei der der Nachrichtenrouter betreibbar ist, um einen IMSI Wert aus der Ziel-MSISDN zu erzeugen, die in der Routinginformationsanforderungsnachricht empfangen wurde durch Anwendung einer Abbildungsfunktion.

8. Vorrichtung nach einem der Ansprüche 1 bis 4, bei der der Nachrichtenrouter betreibbar ist, um einen IMSI Wert unter Verwendung eines dynamisch zugewiesenen Schlüsselwertes zu erzeugen.

9. Vorrichtung nach einem der Ansprüche 1 bis 8, bei der der Nachrichtenrouter betreibbar ist, um auf Basis der Ziel-MSISDN, die vom Sender angefordert wurde, zu bestimmen, ob der Nachrichtenempfänger, der der Ziel-MSISDN entspricht, eine aktive Umleitung hat, die für Text konfiguriert ist, und falls dies so ist, um entsprechend die Zieladresse der Textnachricht vor der Abfrage des Standortverzeichnisses zu modifizieren, um Auslieferungsinformationen betreffend dem umgeleiteten Ziel zu bestimmen und einen Zustellungsversuch zu unternehmen.

10. Vorrichtung nach Anspruch 9, bei der der Nachrichtenrouter betreibbar ist, um zu bestimmen, ob die vom Mobiltelefon stammende Textnachricht umleitbar ist zusätzlich auf Basis von Merkmalen des Subskriptionsprofils des Nachrichtenempfängers und/oder der Adresse, auf die umgeleitet wird.

11. Vorrichtung nach einem der Ansprüche 1 bis 10 einschließlich eines Speichers für das Speichern von wartende-Nachrichten-Informationen in Übereinstimmung mit einer Ziel-MSISDN, die von dem Sender angefordert wurde, die anzeigt, dass zumindest eine Nachricht, die an die MSISDN adressiert ist, nicht erfolgreich ausgeliefert wurde, wobei die wartende-Nachrichten-Information eine Netzwerkadresse beinhaltet, die den Netzwerkmodus darstellt, der die Textnachricht sendete.

12. Vorrichtung nach einem der Ansprüche 1 bis 11, bei der der Nachrichtenrouter betreibbar ist, um in Verbindung mit einer Ziel-MSISDN, die vom Sender angefordert wurde, die gegenwärtig als Umleitzieladresse konfigurierte Adresse zu speichern.

13. Vorrichtung nach Anspruch 12, bei der, falls keine Umleitung eingestellt wurde, oder falls die Umleitung deaktiviert ist, die Umleitzieladresse entweder leer ist, auf den gleichen Wert wie die Ziel-MSISDN gesetzt ist oder als inaktiv markiert ist.

14. Vorrichtung nach Anspruch 12 oder 13, bei der der Nachrichtenrouter betreibbar ist, um gespeicherte Umleitinformationen und/oder wartende-Nachricht-Informationen zu suchen unter Verwendung einer Ziel-MSISDN, die vom Nachrichtensender angefordert wurde, als ein Suchschlüssel.

15. Vorrichtung nach Anspruch 12, 13 oder 14, bei der der Nachrichtenrouter betreibbar ist, um gespeicherte Umleitinformation unter Verwendung einer Umleitzieladresse als Suchschlüssel zu speichern.

16. Vorrichtung nach einem der Ansprüche 12 bis 15, bei der der Nachrichtenrouter betreibbar ist, um die Umleitinformationen unter Verwendung einer Hash-Technik zu speichern und zu suchen.

17. Telekommunikationsdiensteverfahren für ein Mobiltelefonnetzwerk, wobei das Verfahren aufweist das Programmieren eines Standortregisters, um eine ausgewählte Untergruppe von Routinginformationsanforderungsnachrichten zu einem Nachrichtenrouter weiterzuleiten und zwar statt dass das Standortverzeichnis Antworten auf die ausgewählte Untergruppe von Routinginformationsanforderungsnachrichten erzeugt, wobei der Nachrichtenrouter eine modifizierte Antwort auf den Empfang einer Routinginformationsanforderungsnachricht der ausgewählten Untergruppe erzeugt, das Empfangen einer von einem Mobiltelefon stammenden Textnachricht, die mit der Routinginformationsanforderungsnachricht verknüpft ist, das Ableiten der Ziel-MSISDN, die vom Nachrichtensender angefordert wurde und mit der vom Mobiltelefon stammenden Textnachricht verknüpft ist, und das Abrufen des Standortregisters, um Auslieferungsinformationen betreffend dem beabsichtigen Ziel der Textnachricht zu bestimmen.

18. Verfahren nach Anspruch 17, bei dem das Standortverzeichnis die Routinginformationsanforderungsnachricht zum Nachrichtenrouter für ausgewählte Teilnehmer weiterleitet, wie zum Beispiel zu einem Textumleitdienst.

19. Verfahren nach Anspruch 18, bei dem das Standortverzeichnis ebenso eine "Kurznachrichtauslieferungsstatusbericht"-Nachricht an den Nachrichtenrouter für die ausgewählten Teilnehmer weiterleitet.

20. Verfahren nach Anspruch 17, 18 und 19, bei dem die Ziel-MSISDN, die von dem Nachrichtensender angefordert wurde, als aus dem Netzwerk portiert markiert ist und bei dem die Standortverzeichnisadresse, die durch das portierte Standortverzeichnis angezeigt ist, die Adresse des Nachrichtenrouters ist.

21. Verfahren nach einem der Ansprüche 17 bis 20, bei dem der Nachrichtenrouter auf eine Routinginformationsanforderungsnachricht antwortet unter Verwendung eines IMSI Wertes, der nicht von dem Standortverzeichnis oder von der Routinginformationsanforderungsnachricht erhalten wurde.

22. Verfahren nach Anspruch 21, bei dem der IMSI Wert dynamisch durch den Nachrichtenrouter erzeugt wird.

23. Verfahren nach einem der Ansprüche 17 bis 20, bei dem der Nachrichtenrouter einen IMSI Wert aus der Ziel-MSISDN erzeugt, die in der Routinginformationsanforderungsnachricht empfangen wurde, und zwar durch Anwenden einer Abbildungsfunktion.

24. Verfahren nach einem der Ansprüche 17 bis 20, bei dem der Nachrichtenrouter einen IMSI Wert erzeugt unter Verwendung eines dynamisch zugewiesenen Schlüsselwertes.

25. Verfahren nach einem der Ansprüche 17 bis 24, bei dem der Nachrichtenrouter auf Basis der Ziel-MSISDN, die vom Sender angefordert wurde, bestimmt, ob der Nachrichtenempfänger entsprechend der Ziel-MSISDN eine aktive Umleitung hat, die für Text konfiguriert ist, und falls dies so ist, um aus Charakteristiken der Textnachricht zu bestimmen, ob die vom Mobiltelefon stammende Textnachricht umleitbar ist, und falls dies so ist, um entsprechend die Zieladresse der Textnachricht vor der Anfrage an das Standortverzeichnis zu modifizieren, um die Zielinformation betreffend das umgeleitete Ziel zu bestimmen und einen Auslieferungsversuch zu tätigen.

26. Verfahren nach Anspruch 25, bei dem der Nachrichtenrouter bestimmt, ob die vom Mobiltelefon stammende Textnachricht zusätzlich auf Basis der Charakteristiken des Subskriptionsprofils des Nachrichtenempfängers und/oder der Umleitadresse umleitbar ist.

27. Verfahren nach einem der Ansprüche 17 bis 26, das das Speichern einer wartende-Nachricht-Information in Verbindung mit einer Ziel-MSISDN, die vom Sender angefordert wurde, beinhaltet, die anzeigt, dass zumindest eine Nachricht, die an die MSISDN gerichtet ist, nicht erfolgreich ausgeliefert wurde, wobei die wartende-Nachricht-Information eine Netzwerkadresse beinhaltet, die den Netzwerkmodus darstellt, der die Textnachricht sendet.

28. Verfahren nach einem der Ansprüche 17 bis 27, bei dem der Nachrichtenrouter in Verbindung mit einer Ziel-MSISDN, die vom Sender angefordert wird, die Adresse speichert, die gegenwärtig als eine Umleitzieladresse konfiguriert ist.

29. Verfahren nach Anspruch 28, bei dem, falls keine Umleitung eingestellt wurde oder falls die Umleitung deaktiviert ist, die Umleitzieladresse entweder leer ist, als der gleicher Wert wie die Ziel-MSISDN eingestellt ist oder als inaktiv markiert ist.

30. Verfahren nach Anspruch 28 oder 29, bei dem der Nachrichtenrouter Umleitinformationen und/oder wartende-Nachricht-Informationen speichert unter Verwendung einer Ziel-MSISDN, die vom Nachrichtensender als ein Suchschlüssel angefordert wurde, verwendet.

31. Verfahren nach Anspruch 28, 29 oder 30, bei dem der Nachrichtenrouter gespeicherte Umleitinformationen unter Verwendung einer Umleitzieladresse als ein Suchschlüssel sucht.

32. Verfahren nach einem der Ansprüche 28 bis 31, bei dem der Nachrichtenrouter die Umleitinformation unter Verwendung einer Hash-Technik speichert und durchsucht.

33. Computerprogramm mit computerausführbaren Befehlen, die, wenn sie auf einen Computer geladen werden, arbeiten, so dass sie den Computer veranlassen, das Verfahren nach einem der Ansprüche 17 bis 32 durchzuführen.

34. Computerprogrammprodukt mit einem computerlesbaren Medium mit hierauf aufgezeichneten Informationssignalen, die das Computerprogramm nach Anspruch 33 repräsentieren.

## Revendications

1. Appareil de services de télécommunications destiné à être utilisé avec un réseau de télécommunications mobiles, l'appareil comprenant un routeur de messages et un registre de localisation de rattachement programmé pour acheminer au routeur de messages un sous-ensemble sélectionné de messages de demande d'informations de routage, au lieu que le registre de localisation de rattachement produise des réponses au sous-ensemble sélectionné de messages de demande d'informations de routage, dans lequel le routeur de messages est en mesure de produire une réponse modifiée, après réception d'un message de demande d'informations de routage issu du sous-ensemble sélectionné, de recevoir un message de texte destiné à un mobile qui est associé au message de demande d'informations de routage, de dériver le numéro MSISDN de destination demandé par l'expéditeur du message qui est associé au message de texte destiné à un mobile et d'interroger le registre de localisation de rattachement pour déterminer des informations de remise intéressant la destination voulue du message de texte.

2. Appareil selon la revendication 1, dans lequel le registre de localisation de rattachement est en mesure d'acheminer le message de demande d'informations de routage vers le routeur de messages pour des abonnés sélectionnés, par exemple vers un service de transfert de texte.

3. Appareil selon la revendication 2, dans lequel le registre de localisation de rattachement est également en mesure d'acheminer un message de « rapport d'état de livraison de messages courts » vers le routeur de messages pour les abonnés sélectionnés.

4. Appareil selon la revendication 1, la revendication 2 ou la revendication 3, dans lequel le numéro MSISDN de destination demandé par l'expéditeur du message est marqué comme porté en dehors du réseau, et dans lequel l'adresse du registre de localisation de rattachement indiqué comme registre de localisation de rattachement porté est l'adresse du routeur de messages.

5. Appareil selon l'une quelconque des revendications 1 à 4, dans lequel le routeur de messages est en mesure de répondre à un message de demande d'informations de routage en utilisant une valeur IMSI qui n'est pas obtenue auprès du registre de localisation de rattachement ou à partir du message de demande d'informations de routage.

6. Appareil selon la revendication 5, dans lequel la valeur IMSI est créée dynamiquement par le routeur de messages.

7. Appareil selon l'une quelconque des revendications 1 à 4, dans lequel le routeur de messages est en mesure de créer une valeur IMSI à partir du numéro MSISDN de destination reçu dans le message de demande d'informations de routage, en lui appliquant une fonction de mappage.

8. Appareil selon l'une quelconque des revendications 1 à 4, dans lequel le routeur de messages est en mesure de créer une valeur IMSI en utilisant une valeur de clef attribuée dynamiquement.

9. Appareil selon l'une quelconque des revendications 1 à 8, dans lequel le routeur de messages est en mesure de déterminer, sur la base du numéro MSISDN de destination demandé par l'expéditeur, si le destinataire du message correspondant au numéro MSISDN de destination a une fonction de transfert activée qui est configurée pour le texte et, dans ce cas, de déterminer à partir de caractéristiques du message de texte si le message de texte destiné à un mobile est transférable et, dans ce cas, de modifier de manière correspondante l'adresse de destination du message de texte avant de demander au registre de localisation de rattachement de déterminer des informations de remise intéressant la destination de transfert et d'effectuer une tentative de remise.

10. Appareil selon la revendication 9, dans lequel le routeur de messages est en mesure de déterminer en outre si le message du texte destiné à un mobile est transférable sur la base de caractéristiques du profil d'abonnement du destinataire du message et/ou de l'adresse de transfert.

11. Appareil selon l'une quelconque des revendications 1 à 10, comprenant une mémoire destinée à stocker des informations de messages en attente associées à un numéro MSISDN de destination demandé par l'expéditeur, qui indiquent qu'au moins un message destiné au numéro MSISDN n'a pas été remis, les informations de messages en attente comprenant une adresse de réseau représentant le noeud de réseau qui a envoyé le message de texte.

12. Appareil selon l'une quelconque des revendications 1 à 11, dans lequel le routeur de messages est en mesure de stocker, en association avec un numéro MSISDN de destination demandé par l'expéditeur, l'adresse actuellement configurée comme adresse de destination de transfert.

13. Appareil selon la revendication 12, dans lequel, si aucun transfert n'a été établi ou si le transfert est inhibé, l'adresse de destination du transfert est soit masquée, soit renseignée à la même valeur que le numéro MSISDN de destination, soit marquée comme inactive.

14. Appareil selon la revendication 12 ou la revendication 13, dans lequel le routeur de messages est en mesure de rechercher dans des informations de transfert et/ou des informations de message en attente qui ont été mémorisées, en utilisant comme clef de recherche le numéro MSISDN de destination demandé par l'expéditeur du message.

15. Appareil selon la revendication 12, la revendication 13 ou la revendication 14, dans lequel le routeur de messages est en mesure de rechercher dans des informations de transfert qui ont été mémorisées, en utilisant comme clef de recherche une adresse de destination du transfert.

16. Appareil selon l'une quelconque des revendications 12 à 15, dans lequel le routeur de messages est en mesure de mémoriser les informations de transfert et d'y rechercher en utilisant une technique de hachage.

17. Procédé de services de télécommunications destiné à un réseau de télécommunications mobiles, le procédé comprenant les étapes consistant à :
programmer un registre de localisation de rattachement pour qu'il achemine un sous-ensemble sélectionné de messages de demande d'informations de routage au routeur de messages, au lieu que le registre de localisation de rattachement produise des réponses au sous-ensemble sélectionné de messages de demande d'informations de routage ;
sur le routeur de messages, produire une réponse modifiée après réception d'un message de demande d'informations de routage issu du sous-ensemble sélectionné ;
recevoir un message de texte destiné à un mobile associé au message de demande d'informations de routage ;
dériver le numéro MSISDN de destination demandé par l'expéditeur du message associé au message de texte destiné à un mobile ; et
interroger le registre de localisation de rattachement pour déterminer des informations de remise intéressant la destination voulue du message de texte.

18. Procédé selon la revendication 17, dans lequel le registre de localisation de rattachement achemine le message de demande d'informations de routage vers le routeur de messages pour des abonnés sélectionnés, par exemple vers un service de transfert de texte.

19. Procédé selon la revendication 18, dans lequel le registre de localisation de rattachement achemine également un message de « rapport d'état de livraison de messages courts » vers le routeur de messages pour les abonnés sélectionnés.

20. Procédé selon la revendication 17, la revendication 18 ou la revendication 19, dans lequel le numéro MSISDN de destination demandé par l'expéditeur du message est marqué comme porté en dehors du réseau, et dans lequel l'adresse du registre de localisation de rattachement indiqué comme registre de localisation de rattachement porté est l'adresse du routeur de messages.

21. Procédé selon l'une quelconque des revendications 17 à 20, dans lequel le routeur de messages répond à un message de demande d'informations de routage en utilisant une valeur IMSI qui n'est pas obtenue auprès du registre de localisation de rattachement ou à partir du message de demande d'informations de routage.

22. Procédé selon la revendication 21, dans lequel la valeur IMSI est créée dynamiquement par le routeur de messages.

23. Procédé selon l'une quelconque des revendications 17 à 20, dans lequel le routeur de messages crée une valeur IMSI à partir du numéro MSISDN de destination reçu dans le message de demande d'informations de routage, en lui appliquant une fonction de mappage.

24. Procédé selon l'une quelconque des revendications 17 à 20, dans lequel le routeur de messages crée une valeur IMSI en utilisant une valeur de clef attribuée dynamiquement.

25. Procédé selon l'une quelconque des revendications 17 à 24, dans lequel le routeur de messages détermine, sur la base du numéro MSISDN de destination demandé par l'expéditeur, si le destinataire du message correspondant au numéro MSISDN de destination a une fonction de transfert activée qui est configurée pour le texte et, dans ce cas, détermine à partir de caractéristiques du message de texte si le message de texte destiné à un mobile est transférable et, dans ce cas, modifie de manière correspondante l'adresse de destination du message de texte avant de demander au registre de localisation de rattachement de déterminer des informations de remise intéressant la destination de transfert et d'effectuer une tentative de remise.

26. Procédé selon la revendication 25, dans lequel le routeur de messages détermine en outre si le message du texte destiné à un mobile est transférable sur la base de caractéristiques du profil d'abonnement du destinataire du message et/ou de l'adresse de transfert.

27. Procédé selon l'une quelconque des revendications 17 à 26, comprenant l'étape consistant à stocker des informations de messages en attente associées à un numéro MSISDN de destination demandé par l'expéditeur, qui indiquent qu'au moins un message destiné au numéro MSISDN n'a pas été remis, les informations de messages en attente comprenant une adresse de réseau représentant le noeud de réseau qui a envoyé le message de texte.

28. Procédé selon l'une quelconque des revendications 17 à 27, dans lequel le routeur de messages stocke, en association avec un numéro MSISDN de destination demandé par l'expéditeur, l'adresse actuellement configurée comme adresse de destination de transfert.

29. Procédé selon la revendication 28, dans lequel, si aucun transfert n'a été établi ou si le transfert est inhibé, l'adresse de destination du transfert est soit masquée, soit renseignée à la même valeur que un numéro MSISDN de destination, soit marquée comme inactive.

30. Procédé selon la revendication 28 ou la revendication 29, dans lequel le routeur de messages recherche dans des informations de transfert et/ou des informations de message en attente qui ont été mémorisées, en utilisant comme clef de recherche le numéro MSISDN de destination demandé par l'expéditeur du message.

31. Procédé selon la revendication 28, la revendication 29 ou la revendication 30, dans lequel le routeur de messages recherche dans des informations de transfert qui ont été mémorisées, en utilisant comme clef de recherche une adresse de destination du transfert.

32. Procédé selon l'une quelconque des revendications 28 à 31, dans lequel le routeur de messages mémorise les informations de transfert et y recherche en utilisant une technique de hachage.

33. Programme d'ordinateur ayant des instructions exécutables par ordinateur qui, lorsqu'il est chargé sur un ordinateur, est en mesure de commander à l'ordinateur d'exécuter le procédé selon l'une quelconque des revendications 17 à 32.

34. Progiciel d'ordinateur ayant un support lisible par ordinateur portant des signaux d'information enregistrés qui sont représentatifs du programme d'ordinateur selon la revendication 33.
